Europäisches Patentamt

European Patent Office

Office européen des brevets

(19)

(11) **EP 1 308 698 A2**

(12) **EUROPÄISCHE PATENTANMELDUNG**

(43) Veröffentlichungstag:
**07.05.2003 Patentblatt 2003/19**

(51) Int Cl.[7]: **G01D 5/244**

(21) Anmeldenummer: **02022664.3**

(22) Anmeldetag: **10.10.2002**

(84) Benannte Vertragsstaaten:
**AT BE BG CH CY CZ DE DK EE ES FI FR GB GR IE IT LI LU MC NL PT SE SK TR**
Benannte Erstreckungsstaaten:
**AL LT LV MK RO SI**

(30) Priorität: **03.11.2001 DE 10154153**

(71) Anmelder: **ROBERT BOSCH GMBH**
**70442 Stuttgart (DE)**

(72) Erfinder:
- **Steinlechner, Siegbert**
  **71229 Leonberg (DE)**
- **Wenzler, Axel**
  **70569 Stuttgart (DE)**

(54) **Methode zum Offsetabgleich von Winkelsensoren**

(57)     Die Erfindung betrifft ein Verfahren zum Offsetabgleich von Winkelsensoren, welche den zu messenden Winkel auf der Grundlage eines entsprechenden sin- und cos-Signals bestimmen. Zur Verbesserung der Meßgenauigkeit des Winkelsensors wird vorgeschlagen, einen Abtastwert des sin-Signals ($S_y$) aufzunehmen, wenn das cos-Signal ($S_x$) einen Nulldurchgang hat und einen Abtastwert des cos-Signals ($S_x$) aufzunehmen, wenn das sin-Signal ($S_y$) einen Nulldurchgang hat, und den Offset ($S_{x0}$, $S_{y0}$) durch Mittelung gegenüberliegender Abtastwerte ($S_{x1}$, $S_{x2}$ bzw. $S_{y1}$, $S_{y2}$) zu ermitteln. Gemäß einem anderen Verfahren wird vorgeschlagen, wenigstens drei Meßwerte durch Bestimmen des sin-Signals ($S_y$) und des cos-Signals ($S_x$) für wenigstens drei unterschiedliche Winkel aufzunehmen und eine Fehlerquadratanpassung an einen hypothetischen Kreis für diese Meßwerte (P1-P8) durchzuführen, um daraus den Offset ($S_{x0}$, $S_{y0}$) zu ermitteln.

Fig. 1

**Beschreibung**

Technisches Fachgebiet

Die Erfindung betrifft ein Verfahren zum Offsetabgleich von Winkelsensoren, gemäß dem Oberbegriff des Patentanspruchs 1 bzw. 5.

Zur Messung mechanischer Winkel werden häufig Meßeinrichtungen wie z.B. AMR- oder GMR-Sensoren (AMR: Anisotropic Magneto Resistance, GMR: Giant Magneto Resistance) eingesetzt, die jeweils ein Sinus- und ein Cosinus-Signal erzeugen, aus denen der zu messende Winkel errechnet wird. Weitere gattungsgemäße Sensoren sind beispielsweise Hallsensoren sowie optische oder mikromechanische Geber.

AMR-Sensoren werden beispielsweise zur Lenkwinkelmessung in Kfz eingesetzt. Der zu bestimmende Winkel wird bei derartigen Sensoren über eine elektronische Auswertung der zugehörigen sin- und cos-Signale des Sensors ermittelt. Solche sin/cos-Signale sind häufig mit Offsets behaftet, die zu Meßabweichungen und somit zu einer fehlerhaften Winkelbestimmung führen können. Offsets können insbesondere bei Einsatz der Sensoren unter hohen Temperaturen auftreten, wie sie beispielsweise im Motorraum eines Kfz vorherrschen. Bei herkömmlichen Winkelsensoren kommt es unter solchen Bedingungen zu nicht vernachlässigbaren Meßfehlern.

Es ist daher erforderlich, den Offset im jeweiligen Betriebszustand zu ermitteln und bei der Auswertung der sin/cos-Signale zu berücksichtigen.

Aus der DE-P19928482.2 ist beispielsweise ein Drei-Punkte-Verfahren bekannt, bei dem anhand dreier Meßwerte der Offset eines hypothetischen Kreises, der durch die Meßwerte verläuft, bestimmt wird. Bei einer Offsetbestimmung gemäß der Drei-Punkte-Methode können die Fehler jedoch relativ groß werden, wenn die aufgenommenen Meßwerte z.B. durch Rauschen gestört, die zugrundeliegenden Signale gegenüber der optimalen Sinusform verzerrt, die Meßwerte dicht beieinander liegen oder die Amplituden der beiden sin/cos-Signale nicht exakt gleich groß sind.

Es ist daher die Aufgabe der vorliegenden Erfindung, ein Verfahren zu schaffen, mit dem der Offset des sin/cos-Signals in jedem Betriebszustand wesentlich genauer bestimmt und somit die Meßgenauigkeit des Winkelsensors wesentlich verbessert werden kann.

Gelöst wird diese Aufgabe durch die im Patentanspruch 1 sowie 5 angegebenen Merkmale. Weitere Ausgestaltungen der Erfindung sind Gegenstand von Unteransprüchen.

Vorteile der Erfindung

Im wesentlichen werden drei Verfahren vorgeschlagen, die im folgenden als Achsenschnittverfahren (Patentanspruch 1), Rekursives Achsenschnittverfahren (Patentanspruch 4) und N-Punkte-Verfahren nach der Methode des kleinsten Fehlerquadrats (Patentanspruch 5) bezeichnet werden.

a) Achsenschnittverfahren

Sensoren der eingangs genannten Art liefern zwei Ausgangssignale der Form:

$$S_x = S_{x0} + A_x * cos(phi)$$

$$S_y = S_{y0} + A_y * sin(phi)$$

Hierbei ist phi ein Winkel, der mit dem zu messenden Winkel identisch oder zu ihm proportional ist. $S_{x0}$ bzw. $S_{y0}$ sind die Offsets der beiden Signale $S_x$ und $S_y$. $A_x$ und $A_y$ sind die Amplituden des cos- bzw. sin-Signals.

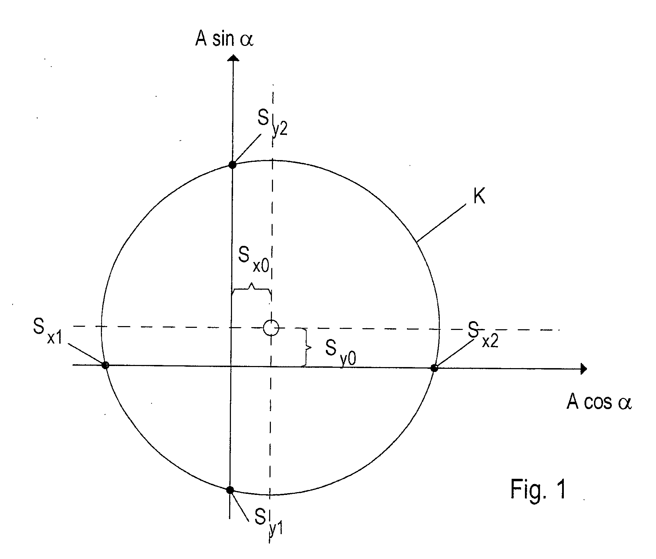

Der wesentliche Gedanke des Achsenschnittverfahrens beruht nun darauf, dass von den Signalen $S_x$ und $S_y$ genau dann Abtastwerte genommen werden, wenn das jeweils andere Signal einen Nulldurchgang hat. Trägt man die Signale $S_x$ ,$S_y$ auf die Achsen eines kartesischen Koordinatensystems, so erhält man an den Schnittpunkten mit den Achsen die Werte $S_{x1}$ ,$S_{x2}$ bzw. $S_{y1}$ ,$S_{y2}$ (vgl. Fig. 1). Daraus lassen sich die Offsets $S_{x0}$ und $S_{y0}$ wie folgt berechnen:

$$S_{x0} = 0.5 * (S_{x1} + S_{x2})$$

$$S_{y0} = 0.5 * (S_{y1} + S_{y2})$$

Gemäß einer bevorzugten Ausführungsform der Erfindung werden genau zwei gegenüberliegende Abtastwerte genommen und wie angegeben gemittelt.

Gemäß einer anderen Ausführungsform der Erfindung können mehrere Abtastwerte $S_{x1}$ bzw. $S_{x2}$ mit näherungsweise gleichem Winkel phi genommen werden, von denen jeweils ein Mittelwert gebildet wird. Schließlich können gegenüberliegende der gemittelten Abtastwerte wie angegeben gemittelt werden.

Auch die berechneten Offsetwerte $S_{x0}$ ,$S_{y0}$ können über mehrere Messungen gemittelt oder mittels eines Tiefpass gefiltert werden, um Störeinflüsse zu minimieren.

b) Rekursives Achsenschnittverfahren

Dieses Verfahren stellt ein weitere Verbesserung des Achsenschnittverfahrens nach Patentanspruch 1 dar. Hierbei wird zunächst der Offset, wie vorstehend unter a) beschrieben, ermittelt. Der berechnete Offset wird schließlich über eine Reglerschaltung an den Eingang des Systems rückgeführt und vom zugehörigen Signal (cos- oder sin-Signal) abgezogen. Dadurch wird der im kartesischen Koordinatensystem gebildete Kreis nach und nach zentriert. Dies hat den Vorteil, dass an den Schnittpunkten des Kreises mit den Achsen die Steigung der abgetasteten Signale gleich Null wird und sich eventuelle Fehler bei der Abtastung nur vermindert auswirken.

c) N-Punkte-Verfahren

Bei diesem Verfahren wird aus N-Messwerten (N≥3) direkt der Offset bestimmt. Hierbei werden zunächst wenigstens drei Meßwerte (bestehend aus einem Messwertepaar $S_x$, $S_y$) durch Bestimmen des sin- und cos-Signals wenigstens dreier Winkel aufgenommen und eine minimale Fehlerquadratanpassung der Meßwerte an einen hypothetischen Kreis durchgeführt. Dies erfolgt vorzugsweise durch die Minimierung folgenden Ausdrucks

$$\sum_{i=1}^{N} \left[ \left[ S_{x,i} - S_{x0} \right]^2 + \left[ S_{y,i} - S_{y0} \right]^2 - r^2 \right]^2$$

Hierbei bezeichnen $S_{x0}$, $S_{y0}$ den Offset in x- bzw. y-Richtung und r den Kreisradius. Die Meßwerte sind jeweils durch ein Wertepaar $(S_{x,i}, S_{y,i})$ mit i=1 .... N bestimmt.

Die gesuchten Parameter ergeben sich damit aus:

$$S_{x0} = \frac{k4 \cdot k1 - k5 \cdot k2}{k6}$$

$$S_{y0} = \frac{k3 \cdot k2 - k5 \cdot k1}{k6}$$

$$r = \sqrt{S_{x0}^2 + S_{y0}^2 + \frac{k0 - 2 \cdot (sx \cdot S_{x0} + sy \cdot S_{y0})}{N}}$$

mit

$$sx = \sum_{i=1}^{N} S_{x,i}$$

$$sx2 = \sum_{i=1}^{N} S_{x,i}^2$$

$$sx3 = \sum_{i=1}^{N} S_{x,i}^3$$

$$sy = \sum_{i=1}^{N} S_{y,i}$$

$$sy2 = \sum_{i=1}^{N} S_{y,i}^2$$

$$sy3 = \sum_{i=1}^{N} S_{y,i}^3$$

$$sxy = \sum_{i=1}^{N} S_{x,i} \cdot S_{y,i}$$

$$sx2y = \sum_{i=1}^{N} S_{x,i}^2 \cdot S_{y,i}$$

$$sxy2 = \sum_{i=1}^{N} S_{x,i} \cdot S_{y,i}^2$$

$$k0 = sx2 + sy2;$$

$$k1 = sx \cdot k0 - N \cdot (sxy2 + sx3);$$

$$k2 = sy \cdot k0 - N \cdot (sx2y + sy3);$$

$$k3 = sx^2 - N \cdot sx2;$$

$$k4 = sy^2 - N \cdot sy2;$$

$$k5 = sx \cdot sy - N \cdot sxy;$$

$$k6 = 2 \cdot (k3 \cdot k4 - k5^2)$$

Die Berechnung des Radius r kann entfallen, da dieser für die Bestimmung der Offsetwerte nicht benötigt wird.

d) Kombination der Verfahren a) mit c) bzw. b) mit c)

Besonders gute Meßergebnisse lassen sich mit dem N-Punkte-Verfahren erzielen, wenn Messwerte an oder nahe der Positionen aufgenommen werden, an denen das sin- oder cos-Signal einen Nulldurchgang hat (wie im Achsenschnittverfahren) und der Offset aus diesen N Messwerten (N≥3) mit dem vorstehend beschriebenen N-Punkte-Verfahren berechnet wird.

In gleicher Weise wie in Verfahren b) ist es wiederum möglich, den so bestimmten Offset mittels einer Reglerschaltung aus dem sin- und cos-Signal auszuregeln.

Zeichnungen

Die Erfindung wird nachstehend anhand der beigefügten Zeichnungen beispielhaft näher erläutert. Es zeigen:

Figur 1 in einer Ebene aufgetragene cos- und sin-Signale zur Erläuterung des Achsenschnittverfahrens;

Figur 2 ein Prinzipschaltbild zur Erläuterung des rekursiven Achsenschnittverfahrens;

Figur 3 von der Kreisform abweichende Signale; und

Figur 4 eine Darstellung zur Erläuterung des Achsenschnittverfahrens in Kombination mit dem N-Punkte-Verfahren.

Zahlreiche Winkelsensoren erzeugen ein sin- und ein cos-Signal, aus denen der zu bestimmende Winkel mittels eines vorgegebenen Algorithmus berechnet wird. In Figur 1 ist ein cos- und ein sin-Signal in einer Ebene aufgetragen. Trägt man das Signal $S_x$ nach rechts und $S_y$ nach oben in der Ebene auf, so erhält man für den Fall gleich großer Amplituden ($A_x = A_y$) einen Kreis.

Die Ausgangssignale lassen sich in folgender Form darstellen:

$$S_x = S_{x0} + A_x * \cos(\text{phi})$$

$$S_y = S_{y0} + A_y * \sin(\text{phi})$$

wobei $S_{x0}$ und $S_{y0}$ die Offsets der Signale bezeichnen.

Wie zu erkennen ist, ist der Kreis K aufgrund seines Offsets $S_{x0}$, $S_{y0}$ vom Mittelpunkt des Koordinatensystems verschoben.

Dabei kann der Offset zu Meßfehlern führen, die nicht mehr innerhalb der Toleranzgrenzen liegen.

Zur Ermittlung des Offsets werden zunächst von den Signalen $S_x$ und $S_y$ genau dann Abtastwerte genommen, wenn das jeweils andere Signal einen Nulldurchgang hat. Betrachtet man die Signale $S_x$, $S_y$ in Fig. 1, so erhält man an den Schnittpunkten mit den Achsen

die Werte $S_{x1}$, $S_{x2}$ bzw. $S_{y1}$, $S_{y2}$. Der Offset $S_{x0}$ bzw. $S_{y0}$ lässt sich nun anhand des Achsenschnittverfahrens besonders einfach berechnen:

$$S_{x0} = 0.5 * (S_{x1} + S_{x2})$$

$$S_{y0} = 0.5 * (S_{y1} + S_{y2})$$

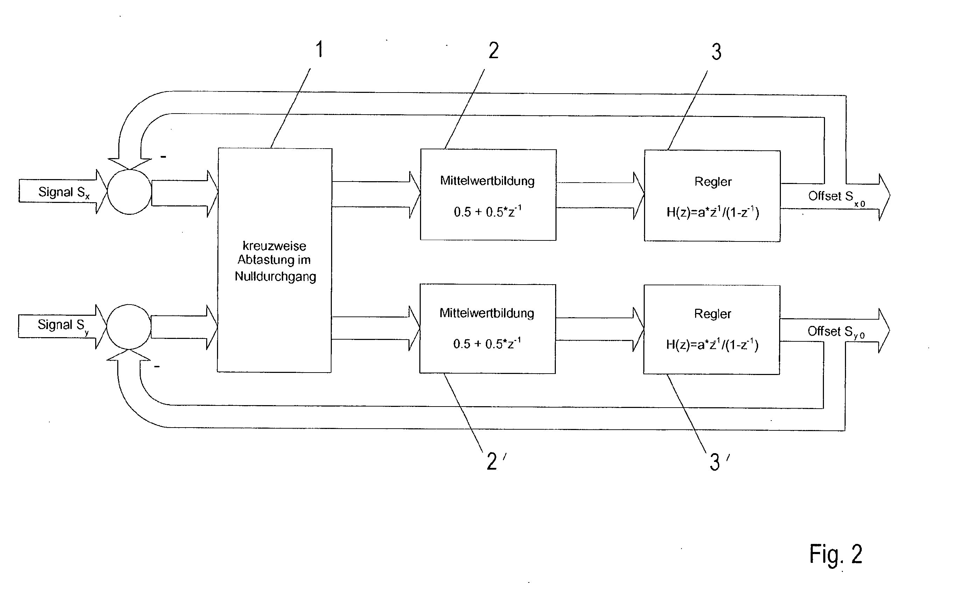

Figur 2 zeigt eine Darstellung zur Erläuterung des rekursiven Achsenschnittverfahrens. Dabei werden die Signale $S_x$ bzw. $S_y$ zunächst kreuzweise im Nulldurchgang des jeweils anderen Signals abgetastet (Funktionsblock 1). Daraus wird der Offset $S_{x0}$ bzw. $S_{y0}$ wie vorstehend beschrieben durch Mittelwertbildung bestimmt (Funktionsblock 2,2'). Der so berechnete Offset wird schließlich über eine Reglerschaltung 3,3' an den Eingang des Systems zurückgeführt und vom zugehörigen Signal $S_x$ bzw. $S_y$ abgezogen. Dadurch wird der Kreis K von Figur 1 nach und nach zentriert. Dies hat den Vorteil, dass an den Schnittpunkten des Kreises mit den Achsen ( $=0°,90°,180°,270°$) die Steigung der abgetasteten Signale $S_x$, $S_y = 0$ wird und sich eventuelle Fehler bei der Abtastung somit nur vermindert auswirken.

Der Regler 3,3' hat vorzugsweise eine Übertragungsfunktion erster Ordnung und ist z.B. als Integrator gebildet.

Bei einer permanenten Drehbewegung werden die aktuellen Offsets $S_{x0}$, $S_{y0}$ durch Mittelwertbildung der jeweils letzten beiden gegenüberliegenden Abtastwerte $S_{x1}$, $S_{x2}$ bzw. $S_{y1}$, $S_{y2}$ bestimmt.

Liegt keine kontinuierliche Drehbewegung vor, wie z.B. beim Lenkrad-Winkelsensor, so muß darauf geachtet werden, dass zur Mittelwertbildung immer möglichst aktuelle gegenüberliegende Abtastwerte $S_{x1}$, $S_{x2}$ bzw. $S_{y1}$, $S_{y2}$ verwendet werden.

Die Übertragungsfunktion H(z) läßt sich z.B. wie folgt angeben:

$$H_{ges}(z) = \frac{1 + z^{-1}}{2} \cdot \frac{a \cdot z^{-1}}{1 + \left[\frac{a}{2} - 1\right] \cdot z^{-1} + \frac{a}{2} \cdot z^{-2}}$$

Mit dem Faktor a läßt sich dabei das Einschwingverhalten einstellen. Kleine Werte von a ergeben eine lange Einschwingdauer und starke Unterdrückung von Störungen durch die damit verbundene Mittelung über viele Werte.

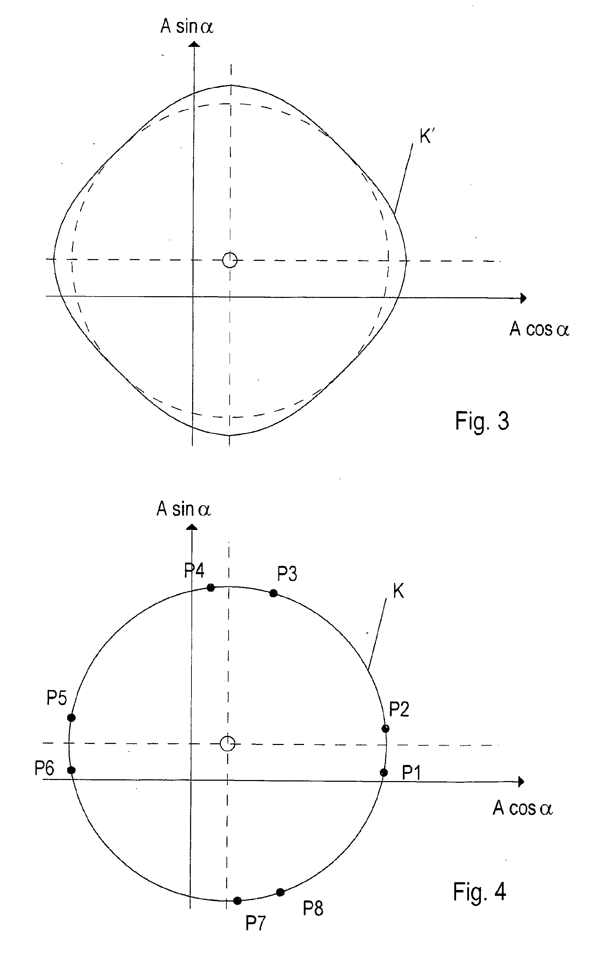

Figur 3 zeigt eine Abweichung der Signale $S_x$, $S_y$ von der Kreisform, wie sie z.B. durch Nichtlinearitäten hervorgerufen werden kann.

Wie am Kreis K' zu erkennen ist, sind die Abweichungen in der Regel symmetrisch, so daß sehr ge-

naue Offsetwerte $S_{x0}$, $S_{y0}$ berechnet werden können, wenn in der Umgebung der Winkel phi=0°,90°,180° und 270° jeweils ein oder mehrere Meßwerte genommen werden, die mit dem N-Punkte-Verfahren ausgewertet werden.

Weiterhin werden in einem zeitdiskret arbeitenden Auswertesystem die Nulldurchgänge der sin- und cos-Signale nie exakt erfasst (insbesondere bei hohen Drehraten), sondern in der Regel etwas davor oder danach. Dadurch werden die nach Verfahren a) oder b) gemessenen Offsets $S_{x0}$, $S_{y0}$ verfälscht. Eine Kombination der Verfahren a) oder b) mit c) verbessert die Genauigkeit deutlich.

Figur 4 zeigt eine solche Kombination des Achsenschnittverfahrens mit dem N-Punkte-Verfahren. Wie zu erkennen ist, wurden jeweils zwei Meßwerte P1-P8 in der Nähe der Nulldurchgänge $S_x$=0 bzw. $S_y$=0 ( =0°, 90°,180°,270°) aufgenommen.

Die Offsetwerte $S_{x0}$, $S_{y0}$ lassen sich mit Hilfe des N-Punkte-Verfahrens (hier N=8) genau bestimmen. Durch die Kombination der Verfahren läßt sich die Messgenauigkeit deutlich steigern.

Bezugszeichenliste

| 1 | Kreuzweise Abtastung |
|---|---|
| 2,2' | Mittelwertbildung |
| 3,3' | Reglerschaltung |
| $S_x$,$S_y$ | sin- bzw. cos-Signal |
| $S_{x0}$ ,$S_{y0}$ | Offset |
| P1-P8 | Messwerte |

**Patentansprüche**

1. Verfahren zum Offsetabgleich von Winkelsensoren, welche einen zu messenden Winkel auf der Grundlage eines entsprechenden ersten Signals (sin-Signal) und eines zweiten Signals (cos-Signal) bestimmen, **gekennzeichnet durch** folgende Schritte:

   - Aufnehmen eines Abtastwertes ($S_{y1}$, $S_{y2}$) des ersten Signals ($S_y$), wenn das zweite Signal ($S_x$) einen Nulldurchgang hat,
   - Aufnehmen eines Abtastwertes ($S_{x1}$, $S_{x2}$) des zweiten Signals ($S_x$), wenn das erste Signal ($S_y$) einen Nulldurchgang hat, und
   - Ermitteln des Offsets ($S_{x0}$ ,$S_{y0}$) **durch** Mittelung gegenüberliegender Abtastwerte ($S_{x1}$, $S_{x2}$ bzw. $S_{y1}$,$S_{y2}$).

2. Verfahren nach Anspruch 1, **gekennzeichnet durch** folgende Schritte:

   - Aufnahme mehrerer Abtastwerte ($S_{x1}$ bzw. $S_{y1}$) mit näherungsweise gleichem Winkel,
   - Mitteln der Abtastwerte ($S_{x1}$ bzw. $S_{y1}$) zum Erhalt eines ersten Mittelwertes,
   - Aufnahme mehrerer gegenüberliegender Abtastwerte ($S_{x2}$ bzw. $S_{y2}$),
   - Mitteln der Abtastwerte ($S_{x2}$ bzw. Sy2) zum Erhalt eines zweiten Mittelwertes, und
   - Ermitteln des Offsets ($S_{x0}$ ,$S_{y0}$) **durch** Mittelung der gegenüberliegenden Mittelwerte.

3. Verfahren nach Anspruch 1 oder 2, **dadurch gekennzeichnet, dass** die ermittelten Offsetwerte ($S_{x0}$ ,$S_{y0}$) über mehrere Messungen gemittelt oder mittels eines Filters gefiltert werden.

4. Verfahren nach einem der vorhergehenden Ansprüche, **dadurch gekennzeichnet, dass** das Verfahren ein rekursives Verfahren ist, bei dem der Offset ($S_{x0}$ , $S_{y0}$) aus dem ersten und zweiten Signal ($S_x$, $S_y$) ausgeregelt wird.

5. Verfahren zum Offsetabgleich von Winkelsensoren, welche einen zu messenden Winkel auf der Grundlage eines entsprechenden sin- und eines cos-Signals bestimmen, **gekennzeichnet durch** folgende Schritte:

   - Aufnahme von wenigstens drei Meßwerten (P1-P8), indem für wenigstens drei unterschiedliche Winkel (phi) das zugehörige sin- und cos-Signal ($S_x$, $S_y$) bestimmt wird,
   - Durchführen einer Fehlerquadratanpassung an einen hypothetischen Kreis (K) für die Messwerte (P1-P8), und
   - Ermitteln des Offsets ($S_{x0}$,$S_{y0}$) aus der Fehlerquadratanpassung.

6. Verfahren nach Anspruch 5, **dadurch gekennzeichnet, dass** die Fehlerquadratanpassung durch Minimierung des Ausdrucks

$$\sum_{i=1}^{N}\left[\left[S_{x,i} - S_{x0}\right]^2 + \left[S_{y,i} - S_{y0}\right]^2 - r^2\right]^2$$

bezüglich $S_{x0}$, $S_{y0}$ und r durchgeführt wird.

7. Verfahren nach Anspruch 5, **dadurch gekennzeichnet, dass** die Messwerte (P1-P8) an oder nahe der Positionen aufgenommen werden, an denen das sin- oder cos-Signal ($S_x$, $S_y$) einen Nulldurchgang hat.

8. Verfahren nach Anspruch 5,6 oder 7 **dadurch gekennzeichnet, dass** der Offset ($S_{x0}$, $S_{y0}$) mittels einer Regelung aus dem sin- und dem cos-Signal ($S_x$, $S_y$) ausgeregelt wird.

**9.** Verfahren nach einem der Ansprüche 5 bis 8, **dadurch gekennzeichnet, dass** acht Meßwerte (P1-P8) aufgenommen werden.

Fig. 1

EP 1 308 698 A2

Signal $S_x$

−

kreuzweise Abtastung im Nulldurchgang

Mittelwertbildung

$0.5 + 0.5 \cdot z^{-1}$

Regler

$H(z) = a \cdot z^1/(1-z^{-1})$

Offset $S_{x0}$

Signal $S_y$

−

Mittelwertbildung

$0.5 + 0.5 \cdot z^{-1}$

Regler

$H(z) = a \cdot z^1/(1-z^{-1})$

Offset $S_{y0}$

1    2    3

2′    3′

Fig. 2

A sin α

A cos α

K′

Fig. 3

A sin α

P4   P3

K

P5

P2

P6   P1

A cos α

P7   P8

Fig. 4

9